# EUROPÄISCHE PATENTSCHRIFT

(11) **EP 0 496 191 B1**
(45) Veröffentlichungstag und Bekanntmachung des Hinweises auf die Patenterteilung: **05.04.1995**
(21) Anmeldenummer: 92100039.4
(22) Anmeldetag: 03.01.1992
(51) Int. Cl.: F16C 11/04

(54) **Geräteträgerkupplung für ein an einem Tragrohr drehbar aufgehängtes Steuergehäuse od. dgl.**
Coupling for appliance support for control case rotatably fixed to an axle tube
Embrayage de support d'appareils pour un boîtier de commande fixé de manière rotative à un tube support

(30) Priorität: 11.01.1991 DE 4100625
(43) Veröffentlichungstag der Anmeldung: 29.07.1992
(73) Patentinhaber: Rose-Elektrotechnik GmbH + Co KG Elektrotechnische Fabrik, D-32457 Porta Westfalica (DE)
(72) Erfinder: Pohlmann, Franz, W-4950 Minden (DE); Seligmann, Heinfred, W-3079 Uchte (DE); Braun, Joerg, W-4952 Porta Westfalica (DE)
(74) Vertreter: Hanewinkel, Lorenz, Dipl.-Phys.

(56) Entgegenhaltungen:
- EP-A- 0 004 830
- CH-A- 484 375
- DE-U- 8 804 644
- GB-A- 2 132 297

## Beschreibung

Die Erfindung bezieht sich auf eine Geräteträgerkupplung für ein an einem vertikal ausgerichteten Tragrohr drehbar aufgehängtes Steuergehäuse oder eine Steuertafel, mit einem Kupplungsgehäuse, welches einerseits das vertikale Tragrohr unter Steck-Schraubverbindung aufnimmt und andererseits ein eingesetztes, das Steuergehäuse bzw. die Steuertafel um die vertikale Tragrohr-Drehachse drehbar tragendes Drehlager aufweist, welches durch eine Axial-Radiallageranordnung in dem Kupplungsgehäuse drehbar und im Lagerspiel und in der Drehgängigkeit einstellbar gehalten ist.

Aufgabe der Erfindung ist es, eine derartige, aus dem DE-U-8 804 644 bekannt gewordene Geräteträgerkupplung in der Konstruktion zu vereinfachen, in den Einzelteilen zu reduzieren, in der Montage zu vereinfachen und in der Handhabung und Funktion zu verbessern sowie mit einer optimalen Einstellmöglichkeit des Lagerspieles und der Drehgängigkeit auszuführen.

Diese Aufgabe wird erfindungsgemäß durch die kennzeichnenden Merkmale des Patentanspruches 1 gelöst, wobei noch die in den einzelnen Unteransprüchen aufgeführten Gestaltungsmerkmale vorteilhafte und förderliche Weiterbildungen der Aufgabenlösung darstellen.

Die erfindungsgemäße Geräteträgerkupplung ist aus wenigen Einzelteilen konstruktionsmäßig und fertigungsmäßig äußerst günstig ausgeführt, leicht zu montieren und zeigt bei einfacher Handhabung eine sehr gute Funktion in der Einstellmöglichkeit und in ihrer Drehgängigkeitswahl.

Für die einstellbare Drehlagerung der Steuertafel bzw. des Steuergehäuses ist ein Kupplungsgehäuse, ein ein- oder mehrteiliges Drehlager, ein Tragring, ein Justierring und ein Spannorgan erforderlich, also wenige und einfache sowie dauerhaft haltbare, leicht zusammenzusetzende und einzustellende Einzelteile.

Diese Geräteträgerkupplung ist mit einer optimal gestalteten Axial-Radiallageranordnung für die Aufhängung und in der Drehgängigkeit einstellbar ausgerüstet, die eine stabile und sichere Geräteaufhängung, leichtgängige und selbsthemmende Geräteverdrehung und auch im Drehwinkel begrenzt einstellbare Gerätedrehung ermöglicht.

Die gesamte Kupplung besteht aus dem mit dem Tragrohr verbindbaren Kupplungsgehäuse als Kupplungs-Oberteil und dem Drehlager als Kupplungs-Unterteil und dieses Drehlager wird von unten her in das Kupplungsgehäuse einmontiert und nimmt durch Schrauben das Steuergehäuse oder die Steuertafel hängend auf.

Das mehrteilige Drehlager setzt sich aus einem Achsrohr, einem oberen Lagerring zur Achsrohrführung, einer unteren Flanschmuffe als untere Achsrohrführung und axiale Abstützung auf dem Tragring, einem Kupplungsring und einem mutterartigen Justierring zusammen, der mit dem Achsrohr zur Lagerspiel- und Drehgängigkeitseinstellung verschraubbar und in der Einstellung arretierbar ist, wobei die Verschraubung eine axiale Spanneinrichtung bildet. Diese Teile werden nacheinander durch Einstecken und Verschrauben im Kupplungsgehäuse von unten her mit wenigen Handgriffen montiert.

Der Kupplungsring wird in seinem Preßdruck gegen die Radialfläche der Flanschmuffe im Lagerspiel und der Drehgängigkeit durch den auf dem Achsrohr verschraubbaren Justierring eingestellt und durch eine in ein Loch einer Lochreihe des Kupplungsringes einschraubbare Sicherungsschraube werden dann Kupplungs- und Justierring miteinander drehbar verbunden und gleichzeitig wird hierdurch die Einstellung gesichert.

Durch eine in eine Nut eingreifende oder zwischen Anschlagstiften bewegbare Nase des Kupplungsgehäuses ist der Verdrehwinkel des Drehlagers in einem Bereich von nahezu 360 Grad oder in einem gewünschten Drehwinkel wahlweise einstellbar.

Bei einer Kupplungsvariante greift das Anschlußstück des Drehlagers zur Halterung des Steuergehäuses oder der Steuertafel in das Kupplungsgehäuse ein und lagert darin mit einem Konus drehbar auf einem Trag-Gleit-Ring.

Ein von außen durch eine Schraube in der Weite (Durchmesser) verstellbarer Justierring wirkt auf den Konus des Anschlußstückes ein und bestimmt das Spiel und die Drehgängigkeit, wobei diese Einstellung äußerst einfach von außen durchführbar ist.

Der geschlitzte Justierring liegt auf dem Umfang des Konusses vollflächig am Anschlußstück an, wodurch ein einfaches und sicheres Ausrichten des Lagerspieles möglich ist und gleichzeitig eine gleichmäßige Lagerbelastung des Anschlußstückes, auch bei unterschiedlicher Gewichtsverteilung im Steuergehäuse bzw. der Steuertafel erreicht wird, so daß das Anschlußstück verschleißarm und dauerhaft haltbar in dem Kupplungsgehäuse gehalten ist.

Das Steuergehäuse bzw. die Steuertafel läßt sich von Hand mit dem Anschlußstück gegenüber dem Tragarm in die gewünschte Position verdrehen und das Steuergehäuse bzw. die Steuertafel fixiert sich dann durch den Justierring aufgrund der gebildeten Selbsthemmung in der jeweiligen Position automatisch.

Der technische Vorteil und der besondere Sinn des vorliegenden Anmeldungsgegenstandes liegt darin, daß beim aus dem DE-U-8 894 644 der Anmelderin bekannten Drehlager die radiale Führung durch zwei Gleitlager gewährleistet wird, was aufwendig und teuer ist. Der als Achsmutter ungeschlitzte oder als Gleitlagerring geschlitzte Justierring nach der Erfindung ist im Gehäuse radial bzw. im Drehlager axial frei beweglich und dient nur dem Ausgleich des Axialspiels.

Weiterhin liegt der geschlitzte Konus-Justierring fest in einer Gehäuse-Dreipunktauflage, und zwar an vorstehenden Anlagestegen des Anschlußstückes bzw. der ungeschlitzte Justierring um das Achsrohr konzentrisch geführt an, wodurch der Justierring eine radiale Führung und einen axialen Spielausgleich übernimmt, was die Gesamtkonzeption des Drehlagers vereinfacht, kostengünstiger und sicherer macht.

Auf den Zeichnungen sind Ausführungsbeispiele der Erfindung dargestellt, welche nachfolgend näher erläutert werden. Es zeigt:
- Fig. 1: einen Vertikalschnitt einer Geräteträgerkupplung mit Kupplungsgehäuse, Drehlager, Steuergehäuse und Tragrohr,
- Fig. 1a: einen Vertikalschnitt derselben Geräteträgerkupplung in gegenüber Fig. 1 vergrößerter Darstellung,
- Fig. 2: eine Draufsicht auf die Geräteträgerkupplung,
- Fig. 3: einen Vertikalschnitt durch das Kupplungsgehäuse,
- Fig. 3a: eine Unteransicht des Kupplungsgehäuses,
- Fig. 4: einen Vertikalschnitt eines zylindrischen Lagerringes,
- Fig. 5: einen Vertikalschnitt eines Achsrohres,
- Fig. 6: einen Vertikalschnitt einer Flanschmuffe,
- Fig. 7: einen Vertikalschnitt eines Kupplungsringes,
- Fig. 7a: eine Unteransicht des Kupplungsringes,
- Fig. 8: einen Vertikalschnitt eines mutterartigen Justierringes,
- Fig. 9: eine Draufsicht auf einen Teil einer Dichtung,
- Fig. 10: einen Vertikalschnitt durch eine zweite Ausführung einer Geräteträgerkupplung mit Kupplungsgehäuse, Drehlager und Steuergehäuse,
- Fig. 11: einen Querschnitt durch die Geräteträgerkupplung gemäß Schnittlinie A-A in Fig. 10,
- Fig. 12: einen Querschnitt durch die Geräteträgerkupplung gemäß Schnittlinie B-B in Fig. 10,
- Fig. 13: einen Vertikalschnitt durch eine dritte Ausführung einer Geräteträgerkupplung,
- Fig. 14: einen Querschnitt durch die Geräteträgerkupplung gemäß Schnittlinie C-C in Fig. 13.

Die Geräteträgerkupplung für ein an einem vertikal ausgerichteten Tragrohr (1) drehbar aufgehängtes Steuergehäuse (2) oder eine Steuertafel (2) weist ein Kupplungsgehäuse (3) auf, welches einerseits das Tragrohr (1) unter Steck-Schraubverbindung (4) aufnimmt und andererseits ein eingesetztes, das Steuergehäuse (2) bzw. die Steuertafel (2) um die vertikale Tragrohr-Drehachse (5) drehbar tragendes Drehlager (6) besitzt, welches durch eine Axial-Radiallageranordnung in dem Kupplungsgehäuse (3) drehbar und im Lagerspiel und der Drehgängigkeit einstellbar gehalten ist.

Die Axial-Radiallageranordnung (7, 8, 9, 10, 11, 12) besitzt einen das Drehlager (6) konzentrisch umgebenden, im Kupplungsgehäuse (3) festgelegten Tragring (7), auf dem das Drehlager (6) mit einer umlaufenden Radialfläche (8) hängend abgestützt ist und weist einen konzentrisch zum Drehlager (6) angeordneten, mit einer axialen oder radialen Spannfläche (9, 10) in oder um das Drehlager (6) fassenden Justierring (11, 12) auf, der durch eine axial oder radial verschraubbare Spanneinrichtung (13, 14) gegenüber dem Drehlager (6) einstellbar ist.

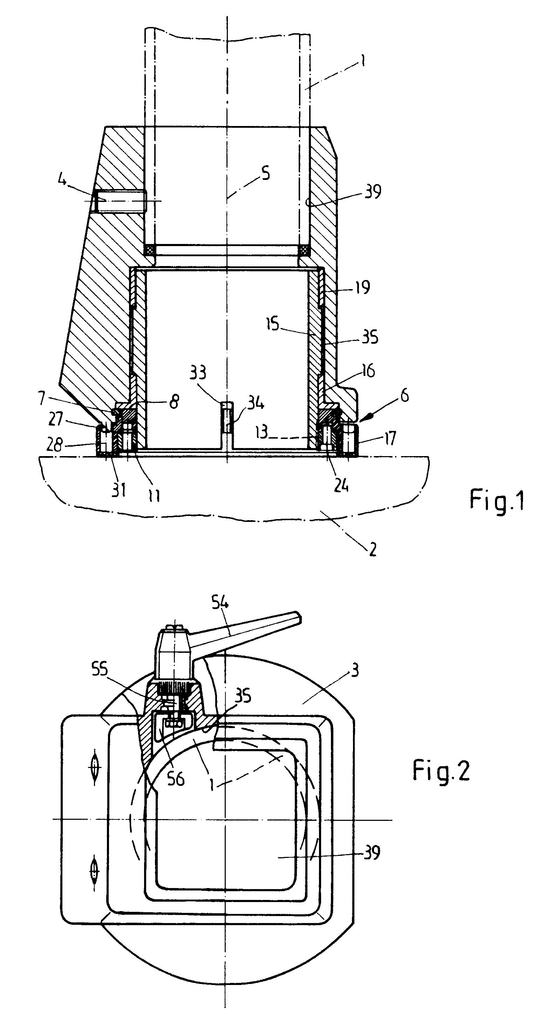

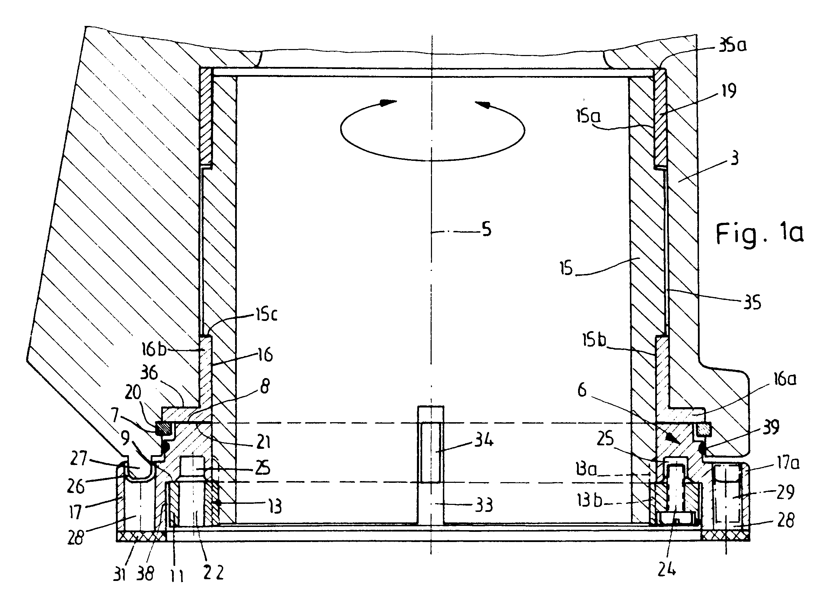

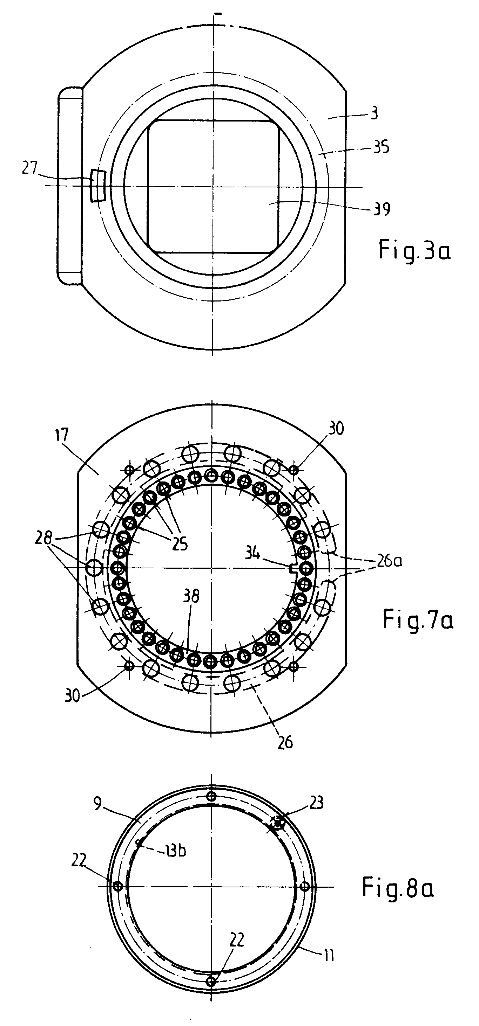

Das Drehlager (6) der Geräteträgerkupplung nach Fig. 1 bis 9 ist mehrteilig ausgebildet und umfaßt
ein in das Kupplungsgehäuse (3) eingestecktes und darin axial drehbares Achsrohr (15),
eine in das Kupplungsgehäuse (3) eingesteckte Flanschmuffe (16), welche sich mit ihrem Flansch (16a) als umlaufende Radialfläche (8) auf dem Tragring (7) abstützt und das Achsrohr (15) als Führung umfaßt und drehbar trägt,
einen konzentrisch um das Achsrohr (15) angeordneten, mit dem Achsrohr (15) verdrehfest verbundenen und in das Kupplungsgehäuse (3) eingreifenden Kupplungsring (17)
und
einen in den Kupplungsring (17) einfassenden und auf dem Achsrohr (15) verschraubbar gelagerten, den Kupplungsring (17) zwischen sich und der Flanschmuffe (16) im Lagerspiel und der Drehgängigkeit in Axialrichtung eingestellt haltenden und in seiner eingestellten Lage mit dem Kupplungsring (17) arretierbaren Justierring (11), wobei die Gewindeverbindung zwischen Achsrohr (15) und Justierring (11) die axiale Spanneinrichtung (13) bildet.

Das Achsrohr (15) zeigt am oberen und unteren Rohrende je eine im Außendurchmesser verringerte Abstufung (15a, 15b); um die obere Abstufung (15a) ist ein zylindrischer Lagerring (19) und um die untere Abstufung (15b) ist die Flanschmuffe (16) angeordnet und das aus der Flanschmuffe (16) nach unten herausragende Ende der unteren Abstufung (15b) zeigt ein Außengewinde (13a) für den Justierring (11).

Der Tragring (7) ist von einem in eine Ringnut (20) des Kupplungsgehäuses (3) eingesetzten Sicherungsring, vorzugsweise Seegerring, gebildet.

Die sich auf dem Tragring (7) abstützende Radialfläche (8) der Flanschmuffe (16) bildet gleichzeitig eine Gleitfläche, die mit der oberen Ringfläche (21) des Kupplungsringes (17) für die Lagerspiel- und Drehgängigkeitseinstellung zusammenwirkt.

Der Justierring (11) ist als Achsmutter mit Innengewinde (13b), mehreren axialen Einstecklöchern (22) für ein Werkzeug zur Ringverdrehung und einer axialen Gewindebohrung (23) für eine mit dem Kupplungsring (17) zusammenwirkende Sicherungsschraube (24) ausgebildet, wobei die Schraube (24) in die Senk-Gewindebohrung (23) versenkt einfaßt.

Der Kupplungsring (17) zeigt auf einem mit Abstand um das Achsrohr (15) verlaufenden Kreisring eine Vielzahl an von seiner Unterseite her axial eingebrachter Sacklöcher (25), in die je nach verschraubter Stellung des Justierringes (11) seine Sicherungsschraube (24) zur Sicherung der Einstellung des Kupplungsringes (17) einfaßt.

Weiterhin hat der Kupplungsring (17) auf einem mit Abstand um die Sacklöcher (25) umlaufenden Kreisring in seinen dem Kupplungsgehäuse (3) benachbarten, gegenüber seiner oberen Ringfläche (21) abgestuften Ringrand (17a) eine einen maximalen Drehwinkel von 350 Grad einnehmende und mit beiden mit Abstand benachbarten Enden Anschläge (26a) bildende Nut (26), in welche eine Nase (27) des Kupplungsgehäuses (3) zur in beiden Drehrichtungen des Drehlagers (6) erfolgenden Drehbegrenzung einfaßt.

In dieser Nut (26) des Kupplungsringes (17) lassen sich auch zusätzlich auf dem Nut-Umfang verteilt angeordnete Einstecklöcher (28) ausnehmen, in die für einen einstellbaren Drehwinkel des Drehlagers (6) Anschlagstifte (29) einsteckbar sind, welche mit der Nase (27) des Kupplungsgehäuses (3) zusammenwirken (Fig. 1a, strichpunktierte Stiftdarstellung).

Weiterhin ist der Kupplungsring (17) mit mehreren, von der Ringunterseite her zugänglichen Befestigungslöchern (30), vorzugsweise in den Kupplungsring (17) eingelassene Muttern (30), zur Befestigung des Steuergehäuses (2) bzw. der Steuertafel (2) mittels Schrauben (32) ausgestattet.

Zwischen Unterseite des Kupplungsringes (17) und dem Steuergehäuse (2) bzw. der Steuertafel (2) wird eine Dichtung (31) in Flachplattenform angeordnet.

Im Achsrohr (15) ist im unteren Endbereich ein axialer Schlitz (33) ausgespart, in den der Kupplungsring (17) mit einer innenseitig vorstehenden Nase (34) eingreift und beide Teile (17, 15) drehbar miteinander verbindet.

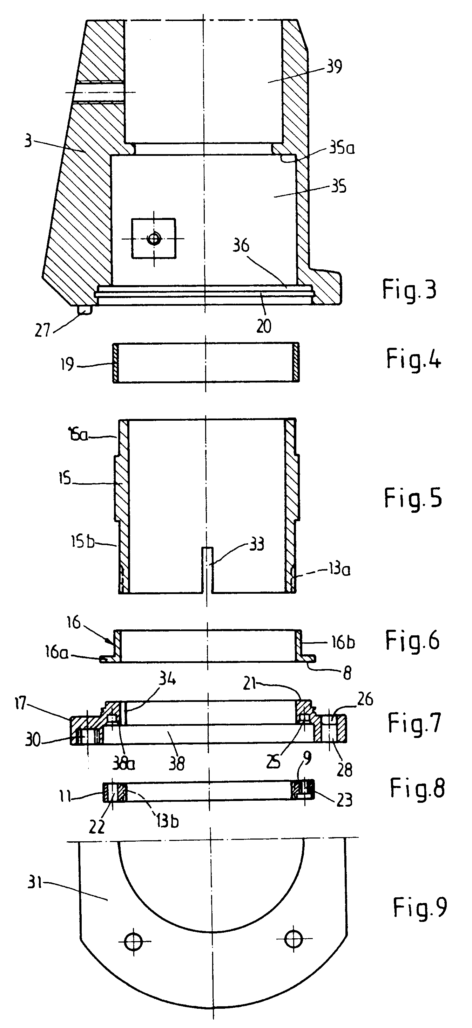

In Fig. 3 bis 9 ist die Geräteträgerkupplung im montagemäßig auseinandergezogenen Zustand gezeigt.

Für die Kupplungsmontage wird zuerst der zylindrische Lagerring (19) in die Bohrung (35) des Kupplungsgehäuses (3) von unten her bis vor den Anschlag (35a) eingepreßt und dann das Achsrohr (15) von unten her eingesteckt, das dann mit seiner oberen Abstufung (15a) in den Lagerring (19) einfaßt. Dann wird die zylindrische Flanschmuffe (16) von unten her auf das Achsrohr (15), und zwar dessen unteren Abstufung (15b), aufgeschoben und in das Gehäuse (3) - dessen Bohrung (35) - eingepreßt, wobei das vertikale, zylindrische Muffenteil (16b) zwischen Gehäusebohrung (35) und Achsrohr (15) liegt und der Flansch (16a) in eine Ringaussparung (36) des Gehäuses (3) eingreift.

Nun wird der Tragring (7) von unten her in die Ringnut (20) des Gehäuses (3) eingesetzt und liegt dabei unter der Radialfläche (8) des Muffenflansches (16a), wodurch die Flanschmuffe (16) getragen und das Achsrohr (15) sich mit dem Abstufungsgrund (15c) auf dem zylindrischen Muffenteil (16b) hängend abstützt.

Jetzt wird der Kupplungsring (17) von unten her unter Zwischenschaltung einer Ringdichtung (39) in das Kupplungsgehäuse (3) eingesetzt und umfaßt den unteren Abstufungsbereich (15b) des Achsrohres (15). Danach wird der Justierring (11) von unten her auf das Achsrohr (15) aufgeschraubt, greift dabei in eine Ausnehmung (38) des Kupplungsringes (17) ein und wirkt mit seiner Spannfläche (9) gegen die Radialfläche (38a) der Ausnehmung (38) ein und trägt somit den Kupplungsring (17).

Das Innengewinde (13b) des Justierringes (11) und das Außengewinde (13a) des Achsrohres (15) bilden die axiale Spanneinrichtung (13).

Durch Verschrauben des Justierringes (11) auf dem Achsrohr (15) drückt dieser den Kupplungsring (17) mehr oder weniger fest mit seiner obenliegenden Ringfläche (21) gegen die Radialfläche (8) der Flanschmuffe (16), wodurch das axiale Spiel und somit die Drehgängigkeit des Drehlagers (6), d.h., des Achsrohres (15) mit Kupplungsring (17) und Justierring (11) in dem Kupplungsgehäuse (3) eingestellt wird.

Ist diese Einstellung erfolgt, wird in den Justierring (11) dann die Sicherungsschraube (24) eingeschraubt, die dann in eines der Löcher (25) des Kupplungsringes (17) eingreift und dadurch die vorgenommene Einstellung sichert.

Nun wird unter Zwischenlegung der Flanschdichtung (31) das Steuergehäuse (2) oder die Steuertafel (2) mittels der in die Gewindelöcher (30) eingreifenden Schrauben (32) unter dem Drehlager (6) befestigt.

Das Achsrohr (15) mit Kupplungsring (17) und Justierring (11) sowie dem Steuergehäuse (2) bzw. der Steuertafel (2) läßt sich dann gegenüber dem Kupplungsgehäuse (3) axial verdrehen, wobei das Achsrohr (15) im feststehenden Lagerring (19) und in der feststehenden Flanschmuffe (16) verdrehbar geführt ist.

Das Tragrohr (1) hat vorzugsweise Kreisquerschnitt und greift in eine eckige Rohraufnahme (39) des Kupplungsgehäuses (3) von oben ein und dabei ist im Gehäuse (3) zusätzlich ein Handhebel (54) mit Schraube (55) und Keil (56) gelagert, wobei der Keil (56) gegen das Tragrohr (1) zur zusätzlichen Arretierung im Gehäuse (3) spannbar ist (Fig. 2).

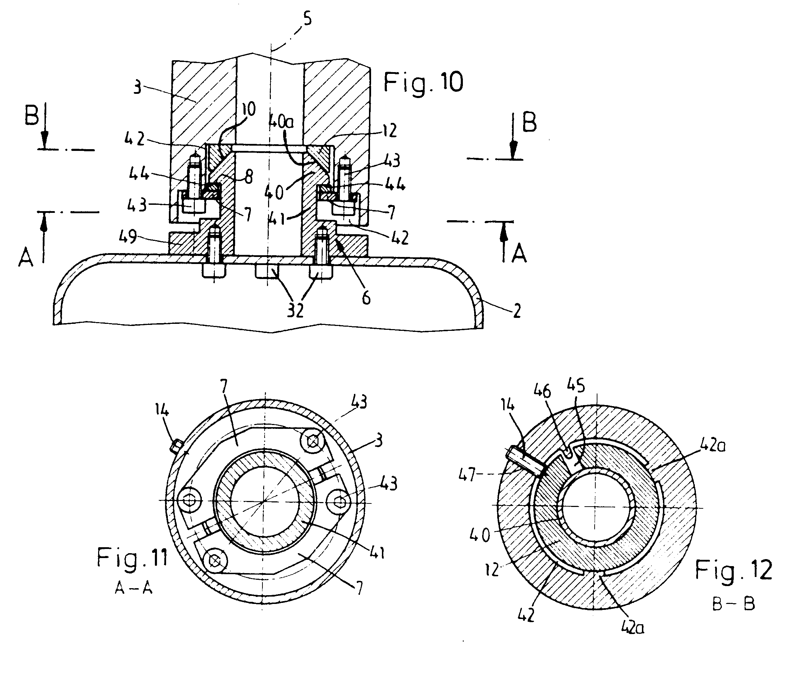

Das Drehlager (6) gemäß der zweiten Ausführung der Geräteträgerkupplung nach Fig. 10 bis 12 ist von einem rohrförmigen, im Kupplungsgehäuse (3) mit seinem oberen, als Kegelstumpf (40) ausgebildeten Ende auf dem Tragring (7) drehbar aufgehängten Anschlußstück (41) gebildet und zwischen Anschlußstück-Kegelstumpf (40) und Kupplungsgehäuse (3) ist ein geschlitzter, kegelförmiger Justierring (12) angeordnet, welcher zur Einstellung des Lagerspiels und der Drehgängigkeit des Anschlußstückes (41) durch ein radiales Spannorgan (14) gegen den Anschlußstück-Kegelstumpf (40) spannbar ist.

Der Kegelstumpf (40) ragt über den Außenquerschnitt des Anschlußstückes (41) hinaus, verjüngt sich nach oben und zur Drehachse (5) hin, wird an seiner mantelseitig umlaufenden Kegelfläche (40a) vom Justierring (12) unter Druckbeaufschlagung umfaßt und bildet mit seiner unteren, waagerechten, über das Anschlußstück (41) radial hinausragenden Kegelstumpffläche eine umlaufende Radialfläche (8) zur Auflage auf dem Tragring (7).

Der Justierring (12) hat einen dreieckigen oder trapezförmigen, mit der Kegelfläche als Spannfläche (10) an dem Kegelstumpf (40) formschlüssig anliegenden Querschnitt und ist in bevorzugter Weise aus Kunststoff hergestellt.

Der Justierring (12) und der Anschlußstück-Kegelstumpf (40) liegen in einer zylindrischen Sackaufnahme (42) des Kupplungsgehäuses (3) und diese Sackaufnahme (42) zeigt vorzugsweise mehrere auf ihrem Umfang verteilte, mit dem Justierring (12) unter Anlage stehende, nach innen vorstehende Flächenbereiche (Anlagestege) (42a) für eine Mehrfachzonen- (Mehrfachpunkt-) Anlage.

Der Tragring (7) ist vorzugsweise zweigeteilt (Fig. 11) und wird durch mehrere, parallel zur Tragrohr-Drehachse (5) verlaufende Schrauben (43) in der Sackaufnahme (42) im Kupplungsgehäuse (3) gehalten; zwischen Tragring (7) und waagerechter Radialfläche (8) läßt sich ein Gleitring (44) aus Kunststoff od. dgl. anordnen.

Der Justierring (12) übergreift mit seinem Schlitz (45) eine am Kupplungsgehäuse (3) innenseitig vorstehende, vorzugsweise angeformte Verdreh-Sicherungsnase (46), durch die er gegen axiales Verdrehen fixiert ist (Fig. 12).

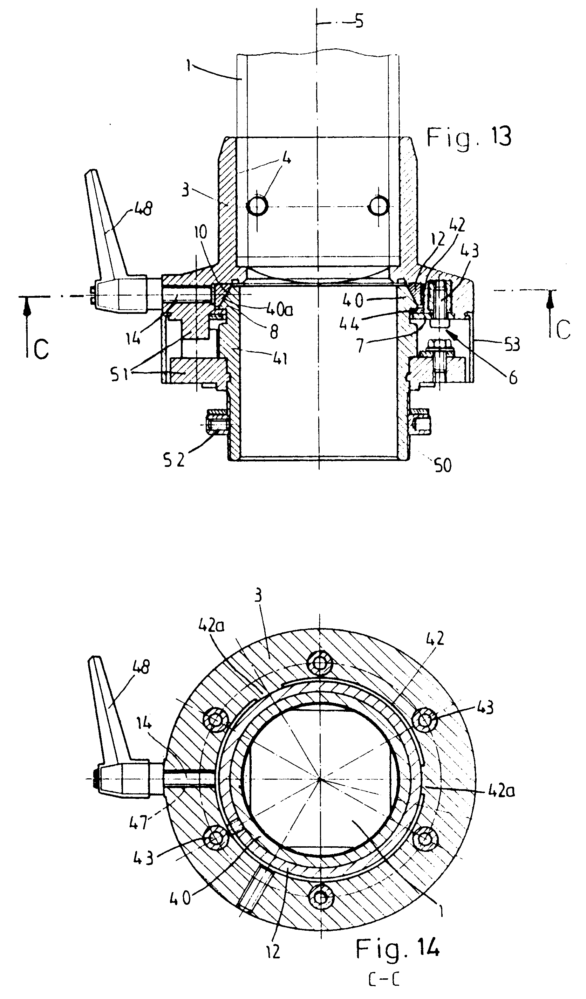

Das Spannorgan (14) ist von einer radial in dem Kupplungsgehäuse (3) in einer Gewindebohrung (47) verdrehbaren, außerhalb des Schlitzes (45) auf den Justierring (12) einwirkenden Schraube gebildet, die als Stiftschraube (Fig. 12) ausgeführt oder mit einem Handgriff (48), wie Drehhebel, versehen ist (Fig. 13 und 14).

Das Anschlußstück (41) ist gemäß Fig. 10 an seinem außerhalb (unter) dem Kupplungsgehäuse (3) liegenden Rohrende zu einem Befestigungsflansch (49) ausgebildet, unter dem das Steuergehäuse (2) bzw. die Steuertafel (2) mittels Schrauben (32) befestigt ist (Fig. 10).

Gemäß der abgewandelten dritten Ausführung der Geräteträgerkupplung nach Fig. 13 und 14 ist das Anschlußstück (41) als Aufnahmerohr (50) aus dem Kupplungsgehäuse (3) nach unten herausgeführt und zwischen einem darauf angeordneten, einstellbaren Drehwinkel-Begrenzungsanschlag (51) und einer Gegenmutter (52) das Steuergehäuse (2) bzw. die Steuertafel (2) abnehmbar festgelegt (Fig. 13).

Der Tragring (7) kann auch als einstückiger Ring ebenso wie der Gleitring (44) ausgeführt sein.

Die Aufnahme (Steck-Schraubverbindung ) (4) im Kupplungsgehäuse (3) ist zylindrisch mit Kreisquerschnitt ausgeführt und nimmt ein im Querschnitt kreisförmiges oder eckiges, eckseitig abgerundetes Tragrohr (Fig. 14) eingesteckt und dann in Höhen- und Drehrichtung gesichert auf.

An dem Kupplungsgehäuse (3) läßt sich ein den Begrenzungsanschlag (51) umgebendes Abdeck- und Schutzrohr (53) anordnen.

## Patentansprüche

1. Geräteträgerkupplung für ein an einem vertikal ausgerichteten Tragrohr (1) drehbar aufgehängtes Steuergehäuse (2) oder eine Steuertafel, mit einem Kupplungsgehäuse (3), welches einerseits das Tragrohr (1) unter Steck-Schraubverbindung (4) aufnimmt und andererseits ein eingesetztes, das Steuergehäuse (2) bzw. die Steuertafel um die vertikale Tragrohr-Drehachse (5) drehbar tragendes Drehlager (6) aufweist, welches durch eine Axial-Radiallageranordnung in dem Kupplungsgehäuse (3) drehbar und im Lagerspiel und der Drehgängigkeit einstellbar gehalten ist, dadurch gekennzeichnet, daß die Axial-Radiallageranordnung (7, 8, 9, 10, 11, 12) einen das Drehlager (6) konzentrisch umgebenden, im Kupplungsgehäuse (3) festgelegten Tragring (7) aufweist, auf dem das Drehlager (6) mit einer umlaufenden Radialfläche (8) hängend abgestützt ist, und einen konzentrisch zum Drehlager (6) angeordneten, mit einer axialen oder radialen Spannfläche (9, 10) in oder um das Drehlager (6) fassenden Justierring (11, 12) besitzt, der durch eine axial oder radial verschraubbare Spanneinrichtung (13, 14) gegenüber dem Drehlager (6) einstellbar ist.

2. Geräteträgerkupplung nach Anspruch 1, dadurch gekennzeichnet, daß das Drehlager (6) mehrteilig ausgebildet ist und umfaßt
a) ein in das Kupplungsgehäuse (3) eingestecktes und darin axial drehbares Achsrohr (15),
b) eine in das Kupplungsgehäuse (3) eingesteckte Flanschmuffe (16), welche sich mit ihrem Flansch (16a) als umlaufende Radialfläche (8) auf dem Tragring (7) abstützt und das Achsrohr (15) als Führung umfaßt und drehbar trägt,
c) einen konzentrisch um das Achsrohr (15) angeordneten, mit dem Achsrohr (15) verdrehfest verbundenen und in das Kupplungsgehäuse (3) eingreifenden Kupplungsring (17)
und
d) einen in den Kupplungsring (17) einfassenden und auf dem Achsrohr (15) verschraubbar gelagerten, den Kupplungsring (17) zwischen sich und der Flanschmuffe (16) im Lagerspiel und der Drehgängigkeit in Axialrichtung eingestellt haltenden und in seiner eingestellten Lage mit dem Kupplungsring (17) arretierbaren Justierring (11), wobei die Gewindeverbindung (13a, 13b) zwischen Achsrohr (15) und Justierring (11) die axiale Spanneinrichtung (13) bildet.

3. Geräteträgerkupplung nach Anspruch 2, dadurch gekennzeichnet, daß das Achsrohr (15) am oberen und unteren Rohrende je eine im Außendurchmesser verringerte Abstufung (15a, 15b) zeigt, um die obere Abstufung (15a) ein zylindrischer Lagerring (19) und um die untere Abstufung (15b) die zylindrische Flanschmuffe (16) angeordnet sind und das aus der Flanschmuffe (16) nach unten herausragende Ende der unteren Abstufung (15b) ein Außengewinde (13a) für den Justierring (11) aufweist.

4. Geräteträgerkupplung nach einem der Ansprüche 1 bis 3, dadurch gekennzeichnet, daß der Tragring (7) von einem in eine Ringnut (20) des Kupplungsgehäuses (3) eingesetzten Sicherungsring, vorzugsweise Seegerring, gebildet ist.

5. Geräteträgerkupplung nach einem der Ansprüche 2 bis 4, dadurch gekennzeichnet, daß die sich auf dem Tragring (7) abstützende Radialfläche (8) der Flanschmuffe (16) gleichzeitig eine Gleitfläche bildet, die mit der oberen Ringfläche (21) des Kupplungsringes (17) für die Lagerspiel- und Drehgängigkeitseinstellung zusammenwirkt.

6. Geräteträgerkupplung nach einem der Ansprüche 1 bis 5, dadurch gekennzeichnet, daß der Justierring (11) als Achsmutter mit Innengewinde (13b), mehreren axialen Einstecklöchern (22) für ein Werkzeug zur Ringverdrehung und einer axialen Gewindebohrung (23) für eine mit dem Kupplungsring (17) zusammenwirkende Sicherungsschraube (24) ausgebildet ist.

7. Geräteträgerkupplung nach Anspruch 6, dadurch gekennzeichnet, daß der Kupplungsring (17) auf einem mit Abstand um das Achsrohr (15) verlaufenden Kreisring eine Vielzahl an von seiner Unterseite her axial eingebrachter Sacklöcher (25) hat, in die je nach verschraubter Stellung des Justierringes (11) seine Sicherungsschraube (24) zur Sicherung der Einstellung des Kupplungsringes (17) einfaßt.

8. Geräteträgerkupplung nach Anspruch 7, dadurch gekennzeichnet, daß der Kupplungsring (17) auf einem mit Abstand um die Sacklöcher (25) liegenden zweiten Kreisring in seinen dem Kupplungsgehäuse (3) benachbarten, gegenüber seiner oberen Ringfläche (21) abgestuften Ringrand (17a) eine einen maximalen Drehwinkel von 350 Grad einnehmende und mit beiden mit Abstand benachbarten Enden Anschläge (26a) bildende Nut (26) aufweist, in welche eine Nase (27) des Kupplungsgehäuses (3) zur in beiden Drehrichtungen des Drehlagers (6) erfolgenden Drehbegrenzung einfaßt.

9. Geräteträgerkupplung nach Anspruch 8, dadurch gekennzeichnet, daß in der Nut (26) im Kupplungsring (17) auf dem Nut-Umfang verteilt angeordnete Einstecklöcher (28) ausgenommen sind, in die für einen einstellbaren Drehwinkel des Drehlagers (6) Anschlagstifte (29) einsteckbar sind, welche mit der Nase (27) des Kupplungsgehäuses (3) zusammenwirken.

10. Geräteträgerkupplung nach einem der Ansprüche 2 bis 9, dadurch gekennzeichnet, daß im Achsrohr (15) im unteren Endbereich ein axialer Schlitz (33) ausgespart ist, in den der Kupplungsring (17) mit einer innenseitig vorstehenden Nase (34) eingreift.

11. Geräteträgerkupplung nach Anspruch 1, dadurch gekennzeichnet, daß das Drehlager (6) von einem einteiligen, rohrförmigen, im Kupplungsgehäuse (3) mit seinem oberen, als Kegelstumpf (40) ausgebildeten Ende auf einem Tragring (7) drehbar aufgehängten Anschlußstück (41) gebildet und zwischen Anschlußstück-Kegelstumpf (40) und Kupplungsgehäuse (3) ein geschlitzter, kegelförmiger Justierring (12) angeordnet ist, welcher zur Einstellung des Lagerspiels und der Drehgängigkeit des Anschlußstückes (41) durch ein radiales Spannorgan (14) als verschraubbare Spanneinrichtung gegen den Anschlußstück-Kegelstumpf (40) spannbar ist.

12. Geräteträgerkupplung nach Anspruch 11, dadurch gekennzeichnet, daß der Kegelstumpf (40) über den Außenquerschnitt des Anschlußstückes (41) hinausragt, sich nach oben und zur Drehachse (5) hin verjüngt, auf seiner mantelseitig umlaufenden Kegelfläche (40a) vom Justierring (12) unter radialer Druckbeaufschlagung umfaßt ist und mit seiner unteren, waagerechten, über das Anschlußstück (41) hinausragenden Kegelstumpffläche die umlaufende Radialfläche (8) zur Auflage auf dem Tragring (7) bildet.

13. Geräteträgerkupplung nach Anspruch 11 oder 12, dadurch gekennzeichnet, daß der Justierring (12) einen dreieckigen oder trapezförmigen, mit der Kegelfläche als radiale Spannfläche (10) an dem Kegelstumpf (40) formschlüssig anliegenden Querschnitt hat und einstückig aus Kunststoff besteht.

14. Geräteträgerkupplung nach einem der Ansprüche 11 bis 13, dadurch gekennzeichnet, daß der Justierring (12) und der Anschlußstück-Kegelstumpf (40) in einer zylindrischen Sackaufnahme (42) des Kupplungsgehäuses (3) liegen und diese Sackaufnahme (42) mehrere auf ihrem Umfang verteilte, mit dem Justierring (12) unter Anlage stehende, nach innen vorstehende Flächenbereiche (Anlagestege) (42a) hat.

15. Geräteträgerkupplung nach einem der Ansprüche 11 bis 14, dadurch gekennzeichnet, daß der Tragring (7) zweigeteilt ist und durch mehrere, parallel zur Tragrohr-Drehachse (5) verlaufende Schrauben (43) in der Sackaufnahme (42) im Kupplungsgehäuse (3) befestigt ist und zwischen Tragring (7) und waagerechter Radialfläche (8) ein Gleitring (44) aus Kunststoff od. dgl. angeordnet ist.

16. Geräteträgerkupplung nach einem der Ansprüche 11 bis 15, dadurch gekennzeichnet, daß der Justierring (12) mit seinem Schlitz (45) eine am Kupplungsgehäuse (3) innenseitig vorstehende Verdreh-Sicherungsnase (46) übergreift (Fig. 12).

17. Geräteträgerkupplung nach einem der Ansprüche 11 bis 16, dadurch gekennzeichnet, daß das Spannorgan (14) von einer radial in dem Kupplungsgehäuse (3) in einer Gewindebohrung (47) verdrehbaren, außerhalb des Schlitzes (45) auf den Justierring (12) einwirkenden Schraube mit/ohne außenliegendem Handgriff (48) gebildet ist.

18. Geräteträgerkupplung nach einem der Ansprüche 11 bis 17, dadurch gekennzeichnet, daß das Anschlußstück (41) an seinem außerhalb (unter) dem Kupplungsgehäuse (3) liegenden Rohrende zu einem Befestigungsflansch (49) ausgebildet ist, unter dem das Steuergehäuse (2) bzw. die Steuertafel (2) mittels Schrauben (32) befestigt ist (Fig. 10).

19. Geräteträgerkupplung nach einem der Ansprüche 11 bis 17, dadurch gekennzeichnet, daß das Anschlußstück (41) als Aufnahmerohr (50) aus dem Kupplungsgehäuse (3) nach unten herausgeführt und zwischen einem darauf angeordneten, einstellbaren Drehwinkel-Begrenzungsanschlag (51) und einer Gegenmutter (52) das Steuergehäuse (2) bzw. die Steuertafel (2) auswechselbar hält (Fig. 13).

## Claims

1. Tool carrier coupling for a steering box (2) or a control table, suspended from a vertically aligned axle tube (1) so that it can rotate, with a coupling housing (3), which on the one hand retains the axle tube (1) by means of a screwed plug (4) and on the other hand has a set-in pivot bearing (6) that supports the steering box (2) or control table so that it can rotate about the vertical centre line of the rotating axle tube (15), the pivot bearing (6) being adapted to rotate via an axial-radial bearing arrangement in the coupling housing (3) and having adjustable bearing play and freedom to rotate, characterised in that the axial-radial bearing arrangement (7, 8, 9, 10, 11, 12) has a supporting ring (7) that is concentric with the pivot bearing (6) and encircles it and is securely mounted in the coupling housing (3), the pivot bearing (6), with a circumferential radial surface (8), being supported by and suspended from said ring (7), and possesses an adjusting ring (11, 12) which is arranged concentrically to the pivot bearing (6) and holds an axial or radial clamping surface (9, 10), into or around the pivot bearing (6), it being possible to adjust the adjusting ring (11, 12) against the pivot bearing (6) by means of a fastening device (13, 14) that can be screwed axially or radially.

2. Tool carrier coupling according to Claim 1, characterised in that the pivot bearing (6) is made up of a number of parts and comprises
a) a central tube (15), inserted in the coupling housing (3) and able to rotate axially therein,
b) a flanged sleeve (16) inserted in the coupling housing (3), the flange (16a) of which forms a circumferential radial surface (8) resting on the supporting ring and surrounds the central tube (15) as a guide and supports it so that it can rotate,
c) a coupling ring (17) that is arranged concentrically about the central tube (15), is connected to the central tube (15) in a manner that resists torsion and engages with the coupling housing (3)
and
d) an interlockable adjusting ring (11) which engages in the coupling ring (17) and can be screwed to bear on the central tube (17), holds the coupling ring (17) between it and the flanged sleeve (16) with the bearing play and axial freedom to rotate adjusted, and can be secured in the adjusted position with the coupling ring (17), by which means the screw-fed connection (13a, 13b) forms the axial fastening device (13) between the central tube (15) and the adjusting ring (11).

3. Tool carrier coupling according to Claim 2, characterised in that the central tube (15) has a step (15a, 15b) with a smaller outside diameter at each of the upper and lower ends of the central tube, with a cylindrical bearing ring (19) and the upper step (15a) and cylindrical flanged sleeves (16) disposed round the lower step (15b) and having an external thread (13a) for the adjusting ring (11) on the end of the lower step (15b) that projects down out of the flanged sleeve (16).

4. Tool carrier coupling according to one of Claims 1 to 3, characterised in that the supporting ring (7) consists of a locking ring, preferably a Seeger circlip ring, inserted into a ring groove (20) in the coupling housing (3).

5. Tool carrier coupling according to one of Claims 2 to 4, characterised in that the radial surface (8) of the flanged sleeve (16) that is supported on the supporting ring (7) forms at the same time a sliding surface which, together with the upper ring surface (21) of the coupling ring (17), provides adjustment of bearing play and freedom to rotate.

6. Tool carrier coupling according to one of Claims 1 to 5, characterised in that the adjusting ring (11) is developed as an axle nut with internal thread (13b), a plurality of axial holes (22) for the insertion of a tool to screw down the ring, and an axial threaded hole (23) for a locking screw (24) which acts in combination with the coupling ring (17).

7. Tool carrier coupling according to Claim 6, characterised in that the coupling ring (17) has a large number of axial blind holes (25) drilled from its underside along a circular line running at a distance from the central tube (15), and into which the locking screw (24) of the adjusting ring (11) engages to secure the adjustment of the coupling ring (17), depending on the position in which the adjusting ring (11) is screwed down.

8. Tool carrier coupling according to Claim 7, characterised in that the coupling ring (17) has a groove (26) on a second circular line at a distance from the blind holes (25), at the edge (17a) that is next to the coupling housing (3), and is stepped towards its top surface (21), taking in a maximum angle of rotation of 350 degrees, the two ends of this groove being only a short distance apart and forming stops (26a), and into the groove a lug (27) on the coupling housing (3) engages for limiting the rotation of the pivot bearing (6) in either direction.

9. Tool carrier coupling according to Claim 8, characterised in that insertion holes (28) are drilled at regular intervals along the circumference of the groove (26) in the coupling ring (17), and into can be inserted stop pins (29) to adjust the angle of rotation of the pivot bearing (6), said pins (29) acting in combination with the lug (27) of the coupling housing (3).

10. Tool carrier coupling according to one of Claims 2 to 9, characterised in that an axial slit (33) is incorporated in the region of the lower end of the central tube (15), into which projects a lug (34) projecting from the inside of the coupling ring (17).

11. Tool carrier coupling according to Claim 1, characterised in that the pivot bearing (6) is made up of a one-piece tubular end piece (41) that is suspended and can rotate in the coupling housing (3) on a supporting ring (7) and the upper end of which is in the form of a truncated cone (40), and that a slotted conical adjusting ring (12) is located between the truncated cone (40) of the end piece and the coupling housing (3) and can be clamped to adjust the bearing play and the ease of rotation of the end piece (41) by means of a radial clamping device (14) in the form of a fastener that can be screwed against the truncated cone (40) of the end piece.

12. Tool carrier coupling according to Claim 11, characterised in that the truncated cone (40) projects beyond the outer cross-section of the end piece (41), tapers upwards and towards the axis of rotation (5), is enclosed at the circumferential conical surface (40a) that is next to the housing by the adjusting ring (12) under radial compressive stress and forms, with the lower horizontal surface of the truncated cone that projects beyond the end piece (41), the circumferential radial surface (8) on which it rests upon the supporting ring (7).

13. Tool carrier coupling according to Claim 11 or 12, characterised in that the adjusting ring (12) has a triangular or trapezoidal cross-section that connects positively with the conical surface as a radial clamping surface (10) against the truncated cone (40) and is made in one piece out of plastic.

14. Tool carrier coupling according to one of Claims 11 to 13, characterised in that the adjusting ring (12) and the truncated cone (40) of the end piece are located in a cylindrical blind locator (42) of the coupling housing (3) and this blind locator (42) has a plurality of flat areas (guide fins) (42a) projecting inwards that are distributed about its circumference and are in contact with the adjusting ring (12).

15. Tool carrier coupling according to one of Claims 11 to 14, characterised in that the supporting ring (7) is in two parts and is fastened by a plurality of screws (43) running parallel to the axis of rotation of the axle tube (5) in the blind locator (42) in the coupling housing (3), and a slip ring (44) made of plastic or similar is placed between the supporting ring (7) and the horizontal radial surface (8).

16. Tool carrier coupling according to one of Claims 11 to 15, characterised in that the adjusting ring (12) with its slit (45) fits over an internal projecting anti-rotation lug (46) in the coupling housing (3) (Fig 12).

17. Tool carrier coupling according to one of Claims 11 to 16, characterised in that the clamping device (14) consists of a radially acting screw with/without an external handle (48), that can be turned in a threaded hole (47) in the coupling housing (3) and operates on the adjusting ring (12) outside the slit (45).

18. Tool carrier coupling according to one of Claims 11 to 17, characterised in that the end piece (41) is developed at its tubular end that lies outside (under) the coupling housing (3) into a securing flange (49) below which the steering box (2) or the control table (2) is secured by means of screws (32) (Fig 10).

19. Tool carrier coupling according to one of Claims 11 to 17, characterised in that the end piece (41) is brought out from the coupling housing (3) downwards as a tubular receptacle (50) and holds the steering box (2) or control table (2) interchangeably between an adjustable stop (51) limiting the angle of rotation and affixed thereto, and a lock nut (52) (Fig 13).

## Revendications

1. accouplement de support d'appareils pour un boîtier de commande (2) ou un panneau de commande (2) fixé de manière orientable sur un tube support (1), avec un carter d'accouplement (3) qui, d'une part, reçoit le tube support (1) vertical avec des connecteurs à fiches et vis (4) et, d'autre part, présente un coussinet de pivotement (6) qui porte le carter ou le Panneau de commande (2) en rotation autour de l'axe vertical (5) du tube support, ce coussinet de pivotement (6) pouvant tourner dans le carter d'accouplement (3) par disposition axiale/radiale du logement, le jeu de coussinet et la marche rotative étant réglables,
caractérisé en ce que l'arrangement axial/radial (7, 8, 9, 10, 11, 12) présente un anneau porteur (7) qui entoure, concentriquement, le coussinet de pivotement (6) et est logé, fixement, dans le carter d'accouplement (3), anneau porteur (7) sur lequel une surface radiale (8), continue du coussinet de pivotement (6) prend appui,
caractérisé en ce que
l'arrangement axial/radial (7, 8, 9, 10, 11, 12) présente un anneau porteur (7), qui, fixé dans le carter d'accouplement (3), entoure, concentriquement, le coussinet de pivotement (6), anneau porteur (7) sur lequel le coussinet de pivotement (6), pendant, s'appuie par sa surface radiale continue (8), et un anneau d'ajustement (11, 12), disposé concentriquement par rapport au coussinet de pivotement (6) et s'engageant, avec une surface de serrage axiale ou radiale (9, 10), dans le coussinet de pivotement (6), cet anneau d'ajustement (11, 12) étant réglable par rapport au coussinet de pivotement (6) à l'aide d'un dispositif de serrage (13, 14) vissable axialement ou radialement.

2. Accouplement de support d'appareils selon la revendication 1,
caractérisé en ce que
le coussinet de pivotement (6) est formé de plusieurs pièces et comprend:
a) un tube d'axe (15) enfiché dans le carter d'accouplement (3), dans lequel il peut pivoter axialement,
b) un manchon à bride (16) inséré dans le carter d'accouplement (3) et dont la bride (16a) prend appui, en tant que surface radiale, continue (8), sur l'anneau porteur (7), lequel manchon à bride (16) entoure le tube d'axe (15), en tant que guidage, et le porte en rotation,
c) un l'anneau d'accouplement (17), disposé concentriquement autour du tube d'axe (15), auquel il est relié, résistant à la torsion, et qui s'engage dans le carter d'accouplement (3)
et
d) une bague d'ajustement (11), s'engageant dans l'anneau d'accouplement (17) et monté, vissable, sur le tube d'axe (15) en maintenant l'anneau d'accouplement (17) entre elle et le manchon à bride (16), le jeu de palier et la liberté de rotation étant réglés dans le sens axial, cette bague d'ajustement (11) étant bloquée par l'anneau d'accouplement (17) en position réglée et la connexion filetée (13a, 13b) formant le dispositif de serrage (13) entre le tube d'axe (15) et la bague d'ajustement (11).

3. Accouplement de support d'appareils selon la revendication 2,
caractérisé en ce que
le tube d'axe (15) présente à chacune de ses extrémités, supérieure et inférieure, un gradin(15a, 15b) de diamètre réduitun anneau de palier (19) entourant le gradin supérieur (15a) et le manchon à bride (16) entourant le gradin inférieur (15b) et que l'extrémité du gradin inférieur (15b), faisant saillie vers le bas hors du manchon à bride (16), présente un filetage extérieur (13a) pour la bague d'ajustement (11).

4. Accouplement de support d'appareils selon l'une des revendications 1 à 3,
caractérisé en ce que
l'anneau porteur (7) est formé par un circlip, depréférence un anneau seeger, inséré dans une rainure annulaire (20) du carter d'accouplement (3).

5. Accouplement de support d'appareils selon l'une des revendications 2 à 4,
caractérisé en ce que
la surface radiale (8) du manchon à bride (16), qui s'appuie sur l'anneau porteur (7), forme, simultanément, une surface de glissement qui coopère avec la surface annulaire supérieure (21) de l'anneau d'accouplement (17) en vue du réglage du jeu de palier et de la liberté de rotation.

6. Accouplement de support d'appareils selon l'une des revendications 1 à 5,
caractérisé en ce que
la bague d'ajustement (11) est conçue sous forme d'écrou d'axe avec filetage intérieur (13b), plusieurs trous d'enfichage axiaux (22) pour un outil servant à faire tourner la bague, et une forure filetée axiale (23) pour une vis de blocage (24) coopérant avec l'anneau d'accouplement (17).

7. Accouplement de support d'appareils selon la revendication 6,
caractérisé en ce que
l'anneau d'accouplement (17) présente, sur une bague circulaire entourant, à distance, le tube d'axe (15), un grand nombre de trous borgnes (25) pratiqués axialement dans sa surface inférieure, trous borgnes (25) dans lesquels sa vis de blocage (24) mord pour assurer le réglage de l'anneau d'accouplement (17) en fonction de la position vissée de la bague d'ajustement (11).

8. Accouplement de support d'appareils selon la revendication 7,
caractérisé en ce que
l'anneau d'accouplement (17) présente, sur une seconde bague circulaire, entourant, à intervalle, les trous borgnes (25), une rainure (26), pratiquée dans le bord annulaire (17a), dégradé par rapport à la surface annulaire (21) et voisin du carter d'accouplement (3), l'angle de rotation maximal de cette rainure (26) étant de 350 degrés et ses deux extrémités, se faisant face à intervalle, formant des butées (26a), un nez (27) du carter d'accouplement (3) s'y engageant en vue de limiter la rotation du coussinet de pivotement (6) dans les deux directions.

9. Accouplement de support d'appareils selon la revendication 8,
caractérisé en ce que
des trous d'enfichage (28) sont pratiqués dans la rainure (26) de l'anneau d'accouplement (17) et répartis sur le pourtour de celle-ci, des tiges de butée (29) pouvant être enfichés dans ces trous (28) en vue de régler l'angle de rotation du coussinet de pivotement (6), et que ces tiges de butée (29) coopèrent avec le nez (27) du carter d'accouplement (3).

10. Accouplement de support d'appareils selon l'une des revendications 2 à 9,
caractérisé en ce que,
dans la zone inférieure de l'extrémité du tube d'axe (15), une fente axiale (33) est pratiquée, dans laquelle l'anneau d'accouplement (17) s'enclenche à l'aide d'un nez (34) faisant saillie vers l'intérieur.

11. Accouplement de support d'appareils selon la revendication 1,
caractérisé en ce que
le coussinet de pivotement (6) est constitué par une pièce de raccordement (41) tubulaire, formée d'une seule pièce, suspendue, dans le carter d'accouplement (3), orientable, sur l'anneau porteur (7), par son extrémité supérieure en forme de cône tronqué (40), et qu'un anneau d'ajustement (12) conique, fendu est disposé entre le cône tronqué (40) de la pièce de raccordement et le carter d'accouplement (3), cet anneau d'ajustement (12) pouvant être serré contre le tronc de cône (40) de la pièce de raccordement à l'aide d'un organe de serrage (14) en vue de régler le jeu de palier et la liberté de pivotement de la pièce de raccordement (41).

12. Accouplement de support d'appareils selon la revendication 11,
caractérisé en ce que
le tronc de cône (40) fait saillie hors de la section transversale extérieure de la pièce de raccordement (41), s'amincit vers le haut, en direction de l'axe de rotation (5), est saisit, sur sa surface conique (40a) continue, côté manteau, par bague d'ajustement (12), étant soumis à une pression radiale et que sa surface inférieure, horizontale en forme de tronc de cône, en saillie par rapport à la pièce de raccordement (41), forme la surface radiale continue (8) prenant appui sur l'anneau porteur (7).

13. Accouplement de support d'appareils selon la revendication 11 pou 12,
caractérisé en ce que
la bague d'ajustement (12) présente une section transversale triangulaire ou trapézoïdale, la surface de serrage radiale (10) étant adjacente, en engagement géométrique, au cône tronqué (40), et est exécutée d'une seule pièce en matière plastique.

14. Accouplement de support d'appareils selon l'une des revendications 11 à 13,
caractérisé en ce que
La bague d'ajustement (12) et le tronc de cône (40) de la pièce de raccordement sont placés dans une cavité borgne, cylindrique (42) du carter d'accouplement (3) et que cette cavité (42) est équipée de plusieurs zones (ponts d'appui) (42a) en saillie vers l'intérieure, lesquelles sont réparties sur son pourtour et sont en contact avec la bague d'ajustement (12).

15. Accouplement de support d'appareils selon l'une des revendications 11 à 14,
caractérisé en ce que
l'anneau porteur (7) est divisé en deux et fixé dans la cavité de déception borgne (42) du carter d'accouplement (3) à l'aide de plusieurs vis (43) parallèles à l'axe de rotation (5) du tube porteur et qu'un anneau de glissement (44) en matière plastique ou analogue est disposé entre l'anneau porteur (7) et la surface radiale, horizontale (8).

16. Accouplement de support d'appareils selon l'une des revendications 11 à 15,
caractérisé en ce que
la bague d'ajustement (12) saisit, à l'aide de sa fente (45) un nez de blocage de pivotement (46) faisant saillie vers l'intérieur sur le carter d'accouplement (3).

17. Accouplement de support d'appareils selon l'une des revendications 11 à 16,
caractérisé en ce que
l'organe de serrage (14) est formé par une vis, pourvue ou non d'une poignée extérieure (48), laquelle vis peut être tournée radialement dans un trou fileté (47), dans le carter d'accouplement (3), et agit, hors de la fente (45), sur la bague d'ajustement (12).

18. Accouplement de support d'appareils selon l'une des revendications 11 à 17,
caractérisé en ce que
la pièce de raccordement (41) forme une bride de fixation (49) à son extrémité tubulaire , située à l'extérieur (dessous) du carter d'accouplement (3), le boîtier de commande (2) ou le panneau de commande (2) étant fixé sous cette bride (49) à l'aide de vis (32) (fig. 10).

19. Accouplement de support d'appareils selon l'une des revendications 11 à 17,
caractérisé en ce que
la pièce de raccordement (41) est conduite hors du carter d'accouplement (3), vers le bas, comme tube de réception (50), et maintient, de façon amo-vible, le boîtier de commande (2) ou le panneau de commande (2) entre une butée de limitation d'angle de rotation réglable (51) et un contre-écrou (52) (fig. 13).
